# EUROPÄISCHE PATENTSCHRIFT

(11) **EP 0 481 470 B1**
(45) Veröffentlichungstag und Bekanntmachung des Hinweises auf die Patenterteilung: **06.07.1994**
(21) Anmeldenummer: 91117688.1
(22) Anmeldetag: 16.10.1991
(51) Int. Cl.: F16C 29/02, B60P 3/40, B23Q 1/18

(54) **Elastischer Lagerblock für eine Linearführung**
Elastic bearing block for linear guide
Palier élastique pour guidage linéaire

(30) Priorität: 16.10.1990 DE 4032820
(43) Veröffentlichungstag der Anmeldung: 22.04.1992
(73) Patentinhaber: Deutsche Star GmbH, 97424 Schweinfurt (DE)
(72) Erfinder: Schlereth, Rudolf, W-8736 Burkardroth (DE)
(74) Vertreter: Weickmann, Heinrich, Dipl.-Ing.

(56) Entgegenhaltungen:
- EP-A- 0 211 243
- EP-A- 0 448 485
- DE-A- 3 328 800
- DE-A- 3 815 595
- US-A- 4 566 738
- US-A- 4 637 738
- US-A- 4 921 360

## Beschreibung

Die Erfindung betrifft einen elastischen Lagerblock für die Lagerung eines linear zu führenden Bauelements auf einem Führungselement, welches auf einer Führungsbahnanordnung längs einer Führungsrichtung linear geführt ist,
wobei in dem Lagerblock in einer ersten zu der Führungsrichtung annähernd parallelen virtuellen Raumscheibe mindestens ein erster Schlitz vorgesehen ist, dessen erster Schlitzboden einen ersten Biegesteg des Lagerblocks begrenzt und
wobei dieser erste Biegesteg - in einer zur ersten virtuellen Raumscheibe parallelen Schnittebene betrachtet - einen länglichen Querschnitt mit einer kurzen und einer langen Querschnittsachse besitzt und die lange Querschnittsachse eine erste Biegeachse des Lagerblocks bildet.

Aus der US-A-4 637 738 ist es bekannt, einen Tisch auf zwei zueinander parallelen Führungsstangen mittels je einer Gruppe von Führungselementen zu führen, wobei die Führungsstangen mit Kreisquerschnitt ausgeführt sind und die Führungselemente entsprechende Führungsbohrungen aufweisen. Dabei ist der Führungstisch mit den Führungselementen über je einen I-förmigen Lagerblock verbunden, dessen Steg durch beidseitige Schlitzung des Lagerblocks gebildet ist und parallel zur Führungsrichtung verläuft. Von den Flanschen des I-förmigen Lagerblocks ist der eine mit dem Tisch und der andere mit dem jeweiligen Führungselement verbunden. Der Steg des I-förmigen Lagerblocks bildet eine elastische Biegestelle mit einer parallel zur Führungsrichtung verlaufenden Biegeachse. Die Lagerblöcke sind nur in beschränktem Maße geeignet, Fehleinstellungen der Führungsstangen zueinander zu kompensieren. Beispielsweise sind sie nicht dazu geeignet, windschiefe Einstellungen der Führungsstangen relativ zueinander in größerem Ausmaß zu kompensieren.

Der Erfindung liegt die Aufgabe zugrunde, einen elastischen Lagerblock der eingangs bezeichneten Bauart dahingehend auszugestalten, daß er in erhöhtem Maße zur Kompensation von Fehleinstellungen mehrerer Führungsbahnen einer Linearführung geeignet ist.

Zur Lösung dieser Aufgabe wird erfindungsgemäß vorgeschlagen, daß in einer zweiten zu der ersten virtuellen Raumscheibe im wesentlichen parallelen virtuellen Raumscheibe mindestens ein zweiter Schlitz vorgesehen ist, dessen zweiter zu dem ersten Schlitzboden im wesentlichen orthogonal verlaufender Schlitzboden einen zweiten Biegesteg des Lagerblocks begrenzt, wobei dieser zweite Biegesteg - in einer zur zweiten Raumscheibe im wesentlichen parallelen Schnittebene betrachtet - einen länglichen Querschnitt mit einer kurzen und einer langen Querschnittsachse besitzt und die lange Querschnittsachse eine zweite Biegeachse des Lagerblocks bildet und wobei die zweite Biegeachse die erste Biegeachse annähernd orthogonal kreuzt.

Bei einem erfindungsgemäß ausgebildeten Lagerblock besteht dank der sich kreuzenden Biegeachsen eine größere Kompensationsfähigkeit des Lagerblocks für eine große Vielfalt von Linearführungen.

Besonders übersichtliche Verhältnisse für die Berechnung von Linearführungen ergeben sich dann, wenn die erste Biegeachse zu der Führungsrichtung im wesentlichen parallel und die zweite Biegeachse zu der Führungsrichtung im wesentlichen orthogonal verläuft.

Höchste Zug- und Drucksteifigkeit des Lagerblocks in Richtung senkrecht zu den Raumscheiben und eine universelle Montierbarkeit erhält man dadurch, daß in mindestens einer der ersten und der zweiten virtuellen Raumscheiben zwei erste bzw. zweite Schlitze vorgesehen sind, deren Schlitzböden zwischen sich den ersten bzw. zweiten Biegesteg bilden, insbesondere wenn der Lagerblock in einer zu den virtuellen Raumscheiben senkrechten Betrachtungsrichtung betrachtet einen im wesentlichen rechteckigen Umriß besitzt und wenn die beiden Biegestege parallel zu jeweils einer Begrenzungsseite des rechteckigen Umrisses verlaufen und wenn sich die beiden Biegeachsen im Zentrum des rechteckigen Umrisses kreuzen.

Der Lagerblock kann mit mindestens einem der Teile Führungselement und Bauelement lösbar verbunden sein, etwa durch Schraubbolzen. Dabei ist es für universelle Einsetzbarkeit des Lagerblocks von Vorteil, wenn der Lagerblock an mindestens einem der Teile Bauelement und Führungselement in einer Befestigungsebene anliegt, welche zu der ersten und der zweiten Biegeachse annähernd parallel ist.

Daneben ist es auch denkbar, daß der Lagerblock mit mindestens und vorzugsweise einem der Teile Führungselement und Bauelement einstückig hergestellt ist.

Um Kerbspannungen im Schlitzbodenbereich möglichst auszuschalten, wird vorgeschlagen, daß der Schlitzboden mindestens eines der Schlitze durch die Umfangsfläche einer sich in den Schlitz öffnenden Bohrung gebildet ist. Dabei kann die Bohrung einen gegenüber der Schlitzbreite vergrößerten Durchmesser besitzen.

Der Lagerblock kann grundsätzlich aus den verschiedensten Werkstoffen hergestellt sein, welche die jeweiligen Festigkeitsanforderungen erfüllen, unter anderem auch aus Kunststoff. Im Fall der Anwendung bei Werkzeugmaschinen und dergleichen wird man den Lagerblock bevorzugt aus Metall und aus Federstahl herstellen.

Die erfindungsgemäßen Lagerblöcke erweisen sich als besonders geeignet, wenn es darum geht, ein Bauelement mittels eines Führungselements auf einer Führungsschiene zu führen, und wenn das Führungselement um die Führungsschiene unverdrehbar ist. Linearführungen mit einer Führungsschiene und einem darauf linear verschiebbaren jedoch unverdrehbaren Führungselement sind beispielsweise aus der europäischen Patentschrift 211 243 bekannt, auf die zur Ergänzung der Offenbarung verwiesen wird. Bei einer solchen Linearführung kann ein Bauelement auf mindestens einer Führungsschiene unter Verwendung mindestens eines Lagerblocks als Verbindungsmittel zwischen dem Bauelement und mindestens einem auf der Führungsschiene geführten Führungselement geführt sein.

Nach einer ersten Ausführungsform einer solchen Linearführung ist vorgesehen, daß das Bauelement durch mindestens einen Lagerblock auf mindestens einem auf einer Führungsschiene laufenden Führungselement gelagert ist und daß das Bauelement ferner durch mindestens ein zusätzliches Unterstützungselement auf einer außerhalb der Führungsschiene gelegenen zur Führungsschiene parallelen Unterstützungsbahn geführt ist. Dabei kann das Unterstützungselement mit der Unterstützungsbahn insbesondere in der Weise zusammenwirken, daß keine Seitenführungskräfte in einer die Führungsschiene und die Unterstützungsbahn verbindenden Ebene zwischen dem Unterstützungselement und der Unterstützungsbahn übertragbar sind. Für diesen Anwendungsfall ist die erfindungsgemäße Ausbildung des Lagerblocks deshalb besonders geeignet, weil der Lagerblock um eine zu den Raumscheiben senkrechte Hochachse im wesentlichen torsionssteif ist, so daß schon bei Verwendung eines einzigen Führungselements auf der Führungsschiene und eines einzigen Lagerblocks zwischen diesem Führungselement und dem Bauelement die Parallelführung des Bauelements längs der Führungsschiene gewährleistet ist.

Besonders günstige Führungsverhältnisse ergeben sich dabei dann, wenn die Gesamtzahl der Führungselemente und der zusätzlichen Unterstützungselemente mindestens und vorzugsweise 3 ist.

Als Unterstützungselemente ohne Seitenführung an der Unterstützungsbahn kommen insbesondere Laufrollen in Frage, welche auf einer planen, das heißt, im Laufbahnbereich nicht profilierten Laufebene laufen. Diese Laufebene kann dabei gleichzeitig Träger der Führungsschiene sein.

Eine unter dem Gesichtspunkt der Führungsgenauigkeit und der Wirtschaftlichkeit besonders günstige Ausführungsform sieht vor, daß neben einem Führungselement zwei in Führungsrichtung beabstandete Unterstützungselemente vorgesehen sind. Bei dieser Ausführungsform ist durch die beiden Biegeachsen des Lagerblocks zum einen gewährleistet, daß ein Höhenfehler der Unterstützungsbahn gegenüber der Führungsschiene ausgeglichen wird,und zum anderen gewährleistet, daß eine Parallelitätsabweichung der Führungsschienenachse zur Laufebene ausgeglichen wird. Schließlich ist durch die Torsionssteifigkeit des Lagerblocks um eine zu den Raumscheiben senkrechte Achse gewährleistet, daß das Bauelement um diese Hochachse drehsteif ist, auch wenn zwischen den Unterstützungselementen und der Unterstützungsbahn keine Führungskräfte in der die Unterstützungsbahn und die Führungsschiene verbindenden Ebene wirksam sind. Das bei Linearführungen mit zwei seitlich führenden Führungsschienen bestehende Problem der Parallelhaltung der Führungsschienen in ihrer Verbindungsebene besteht bei dieser Ausführungsform grundsätzlich nicht.

Die erfindungsgemäßen Lagerblöcke sind aber auch dann anwendbar, wenn das Bauelement auf zwei zueinander im wesentlichen parallelen Führungsschienen durch jeweils mindestens ein Führungselement geführt ist, etwa bei einer Ausführungsform, bei der das Bauelement auf einer ersten Führungsschiene durch zwei Führungselemente unter Vermittlung jeweils eines Lagerblocks geführt ist und auf der zweiten Führungsschiene durch ein einziges Führungselement wiederum unter Vermittlung eines Lagerblocks.

Das Führungselement ist bevorzugt vom Typ der in der europäischen Patentschrift 211 243 beschriebenen Führungselemente, das heißt, es ist bevorzugt U-förmig ausgebildet mit mindestens zwei einen Teil der Führungsschiene zwischen sich aufnehmenden Schenkeln und einem diese Schenkel miteinander verbindenden Steg, wobei jedem der Schenkel mindestens ein Wälzkörperumlauf zugeordnet ist und jeder der Wälzkörperumläufe eine lastübertragende Wälzkörperreihe in Eingriff mit jeweils einer lastaufnehmenden Laufbahn des jeweiligen Schenkels des Führungselements und jeweils einer lastübertragenden Laufbahn an einer diesem Schenkel benachbarten Seitenfläche der Führungsschiene aufweist und wobei weiter auf dem Steg mindestens ein Lagerblock angeordnet ist.

Die beiliegenden Figuren erläutern die Erfindung anhand eines Ausführungsbeispiels; es stellen dar:
- Figur 1: eine Führungsschiene mit Führungselement und Lagerblock in Richtung der Längsachse der Führungsschiene gesehen;
- Figur 2: eine Seitenansicht zu Figur 1 in Pfeilrichtung II der Figur 1;
- Figur 3: eine Ansicht entsprechend Figur 1 bei Einstückigkeit des Führungselements und des Lagerblocks;
- Figur 4: eine Seitenansicht zur Figur 3 in Pfeilrichtung IV der Figur 3;
- Figur 5: eine Ansicht entsprechend Figur 1 mit einer abgewandelten Ausführungsform des Lagerblocks und mit Darstellung von Details des Führungselements;
- Figur 6: eine Linearführung unter Verwendung der Baugruppe nach Figur 1;
- Figur 7: eine Seitenansicht zur Figur 6 in Pfeilrichtung VII der Figur 6;
- Figur 8: eine Linearführung unter Verwendung mehrerer Baugruppen gemäß Figur 1;
- Figur 9: eine Seitenansicht zur Figur 8 in Pfeilrichtung IX der Figur 8.

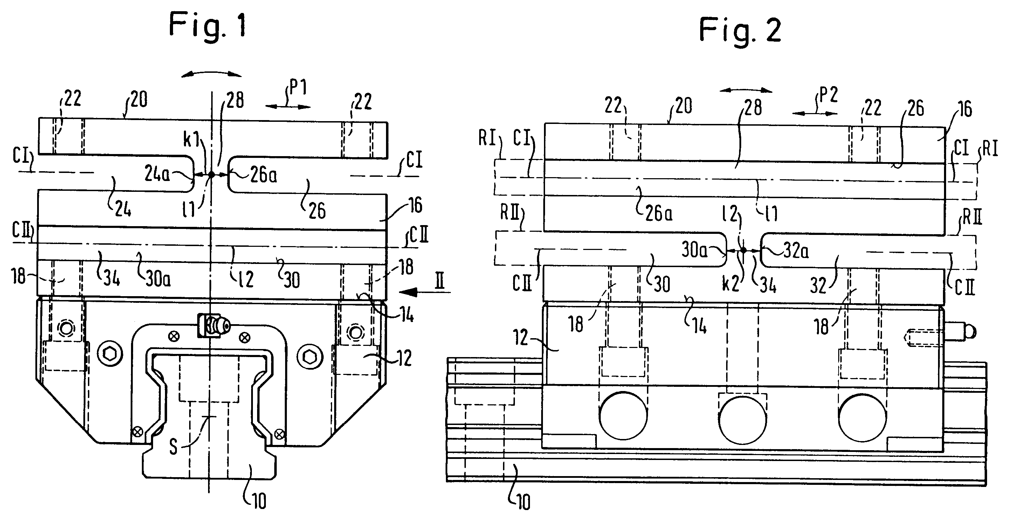

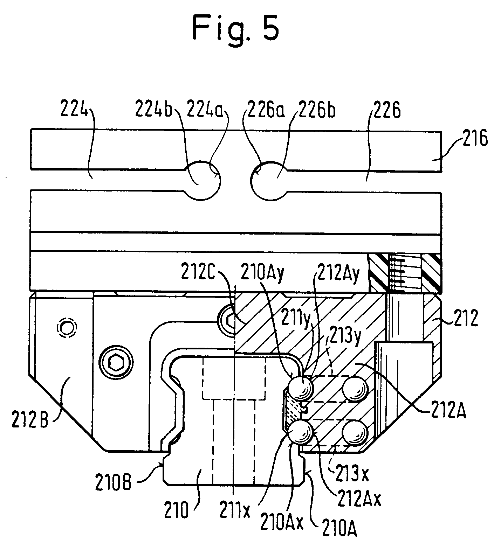

In Figur 1 und 2 ist mit 10 eine Führungsschiene bezeichnet, auf die ein U-förmiger Führungswagen 12 verschiebbar geführt ist. Dabei ist der Führungswagen 12 um die Längsachse S der Führungsschiene unverdrehbar. Auf Einzelheiten der Führung des Führungswagens 12 auf der Führungsschiene 10 wird später im Zusammenhang mit Figur 5 eingegangen. Im übrigen wird auf die europäische Patentschrift 211 243 verwiesen.

Der Führungswagen 12 weist eine Aufspannfläche 14 auf, auf welcher ein elastischer Lagerblock 16 gelagert und durch Schraubbolzen 18 befestigt ist. Der Lagerblock 16 weist seinerseits eine Aufspannfläche 20 auf, auf der ein Bauelement, beispielsweise ein verschiebbares Teil einer Werkzeugmaschine aufgespannt werden kann, wozu Gewindebohrungen 22 vorgesehen sind. Der Lagerblock 16 weist in einer ersten virtuellen Raumscheibe RI zwei erste Schlitze 24 und 26 mit je einer Schlitzbodenfläche 24a und 26a auf. Die Schlitzbodenflächen 24a und 26a begrenzen zwischen sich einen ersten Biegesteg 28, welcher in einer Querschnittsebene CI betrachtet einen länglichen Querschnitt besitzt mit einer kurzen Querschnittsachse k1 und einer langen Querschnittsachse l1. Die lange Querschnittsachse l1 stellt eine erste Biegeachse dar, die parallel zur Längsachse S der Führungsschiene 10 verläuft. In einer zu der ersten Raumscheibe RI parallelen Raumscheibe RII sind zweite Schlitze 30 und 32 mit Schlitzbodenflächen 30a und 32a vorgesehen. Diese Schlitzbodenflächen 30a und 32a begrenzen einen zweiten Biegesteg 34, welcher in einer Querschnittsebene CII wiederum einen länglichen Querschnitt besitzt mit einer kurzen Querschnittsachse k2 und einer langen Querschnittsachse l2, wobei die lange Querschnittsachse l2 eine zweite Biegeachse des Lagerblocks 16 darstellt. Die beiden Biegeachsen l1 und l2 kreuzen sich orthogonal. Die Aufspannfläche 20 kann gegenüber dem Führungselement 12 sowohl um die erste Biegeachse l1 als auch um die zweite Biegeachse l2 schwenken. Darüber hinaus ist je nach Bemessung der kurzen Querschnittsachsen k1 und k2 auch eine elastische Verschiebemöglichkeit der oberen Aufspannfläche 20 in Richtung der Doppelpfeile P1 und P2 denkbar, wobei eine S-förmige Deformation des jeweiligen Biegestegs eintritt.

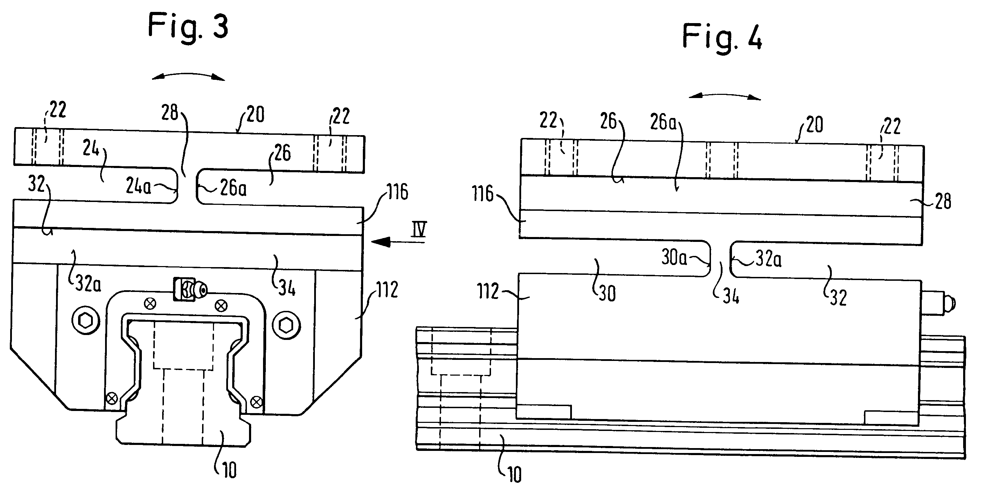

Die Ausführungsform der Figuren 3 und 4 unterscheidet sich von denjenigen nach Figuren 1 und 2 nur dadurch, daß der Lagerblock 116 einstückig mit dem Führungswagen 112 ausgebildet ist.

Die Ausführungsform nach Figur 5 entspricht grundsätzlich derjenigen nach Figur 1 mit dem Unterschied, daß am Grund der Schlitze 224 und 226 Bohrungen 224b und 226b gebildet sind, welche die Schlitzbodenflächen 224a und 226a bilden und der Vermeidung von Kerbspannungskonzentrationen dienen. Des weiteren erkennt man in Figur 5, daß der Führungswagen 212 mit zwei Schenkeln 212A und 212B ausgeführt ist, welche durch einen Steg 212C miteinander verbunden sind. Zwischen jedem der Schenkel 212A und 212B und den zugehörigen Seitenflächen 210A und 210B der Führungsschiene 210 sind lastübertragende Kugelreihen 211x und 211y vorgesehen, welche je einer geschlossenen Kugelschleife 213x bzw. 213y angehören. Die lastübertragenden Kugelreihen 211x und 211y laufen einerseits auf lastübertragenden Laufbahnen 212Ax und 212Ay des Schenkels 212A und andererseits auf lastaufnehmenden Laufbahnen 210Ax und 210Ay der Führungsschiene 210.

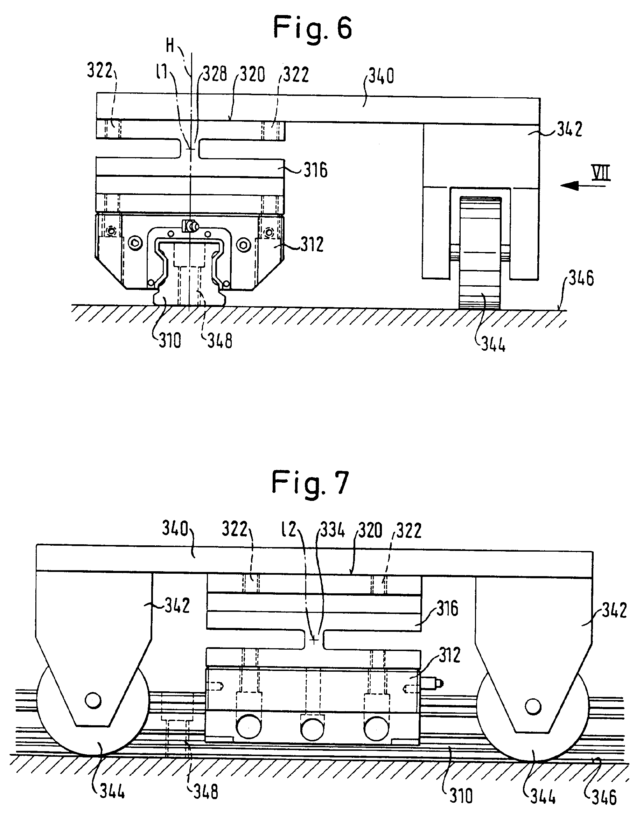

In den Figuren 6 und 7 ist eine Linearführung für ein als Tisch ausgeführtes Bauelement 340 dargestellt. Dieser Tisch ist auf einer Führungsschiene 310 mittels eines Führungswagens 312 und eines elastischen Lagerblocks 316 geführt und zwar ist - wie aus Figur 7 zu ersehen - ein einziger Führungswagen 312 mit einem einzigen Lagerblock 316 vorgesehen. Analoge Teile sind mit den gleichen Bezugszeichen versehen wie Figuren 1 und 2, jeweils vermehrt um die Zahl 300.

Der Tisch 340 ist ferner durch zwei Unterstützungselemente 342 mit Laufrollen 344 unterstützt. Die Laufrollen 344 laufen auf einer Laufebene 346, auf welcher die Führungsschiene 310 durch Schraubbolzen 348 befestigt ist.

Man erkennt, daß die Laufrollen 344 an der Laufbahn 346 keine Seitenführung haben. Die Seitenführung ist allein durch den Führungswagen 312 hergestellt, so daß keinerlei Zwängungsprobleme durch die Führung in der Führungsschiene 310 einerseits und durch den Eingriff der Laufrollen 344 mit der Laufbahnebene 346 andererseits zu befürchten sind. Sollten Höhenfehler zwischen der Laufbahnebene 346 einerseits und den Laufbahnen der Führungsschiene 310 andererseits vorhanden sein, so läßt sich dieser Fehler ohne weiteres durch eine innere Biegung des Lagerblocks 316 um die erste Biegeachse l1 ausgleichen. Sollten darüber hinaus die Laufbahnen der Führungsschiene 310 gegenüber der Laufbahnebene 346 windschief verlaufen, so läßt sich dies durch eine innere Biegung des Lagerblocks um die zweite Biegeachse l2 ausgleichen. Ein Pendeln des Tisches um die Hochachse H ist ausgeschlossen, weil einerseits der Führungswagen 312 pendelfrei auf der Führungsschiene 310 geführt ist und andererseits die beiden Stege 328 und 334 aufgrund ihrer Länge für eine hohe Torsionssteifheit der Aufspannfläche 320 gegenüber dem Führungswagen 312 sorgen.

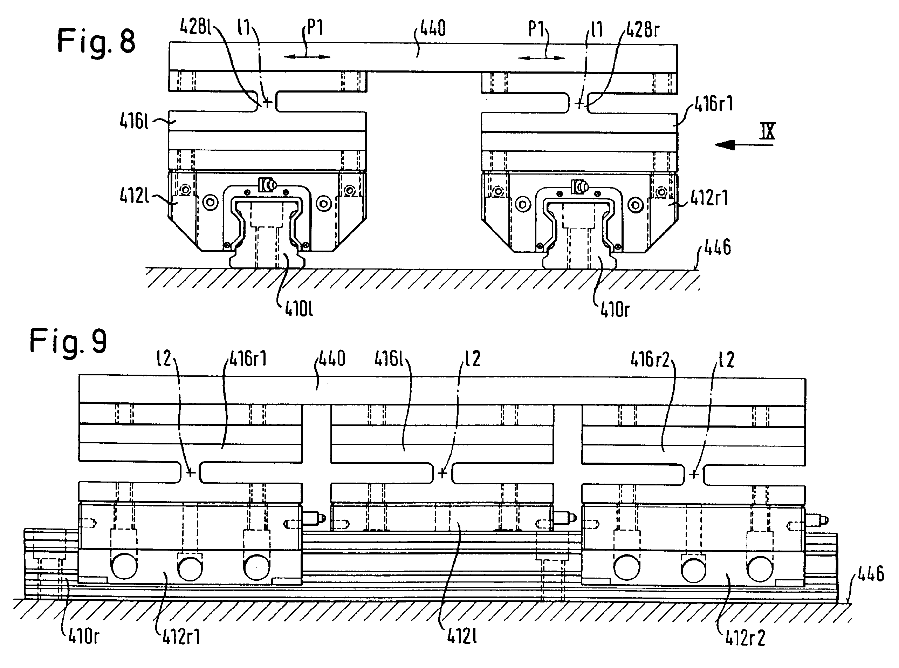

In den Figuren 8 und 9 sind zwei Führungsschienen 410l und 410r vorgesehen. Auf der Führungsschiene 410l läuft ein einziger Führungswagen 412l, während auf der Führungsschiene 410r zwei Führungswagen 412r1 und 412r2 laufen. All diese Führungswagen sind über Lagerblöcke 416l,416r1 und 416r2 mit einem Tisch 440 verbunden. Ein Höhenversatz der Führungsschienen 410l und 410r kann ausgeglichen werden durch innere Biegungen der Lagerblöcke um die ersten Biegeachsen l1. Ein windschiefer Verlauf der Führungsschienen kann ausgeglichen werden durch innere Biegung der Lagerblöcke um die Biegeachsen l2. Parallelitätsabweichungen der Führungsschienen 410l und 410r in der Aufspannebene 446 können durch seitlichen Versatz in Richtung der Doppelpfeile P1 ausgeglichen werden, wobei die Stege 428l und 428r S-förmige Schubverformungen erfahren.

## Patentansprüche

1. Elastischer Lagerblock für die Lagerung eines linear zu führenden Bauelements (340) auf einem Führungselement (12), welches auf einer Führungsbahnanordnung (10) längs einer Führungsrichtung (S) linear geführt ist,
wobei in dem Lagerblock (16) in einer ersten zu der Führungsrichtung (S) annähernd parallelen virtuellen Raumscheibe (RI) mindestens ein erster Schlitz (24,26) vorgesehen ist, dessen erster Schlitzboden (24a,26a) einen ersten Biegesteg (28) des Lagerblocks (16) begrenzt und
wobei dieser erste Biegesteg (28) - in einer zur ersten virtuellen Raumscheibe (RI) parallelen Schnittebene (CI) betrachtet - einen länglichen Querschnitt mit einer kurzen und einer langen Querschnittsachse (k1,l1) besitzt und die lange Querschnittsachse (l1) eine erste Biegeachse (l1) des Lagerblocks (16) bildet,
**dadurch gekennzeichnet,**
daß in einer zweiten zu der ersten virtuellen Raumscheibe (RI) im wesentlichen parallelen virtuellen Raumscheibe (RII) mindestens ein zweiter Schlitz (30,32) vorgesehen ist, dessen zweiter zu dem ersten Schlitzboden (24a,26a) im wesentlichen orthogonal verlaufender Schlitzboden (30a,32a) einen zweiten Biegesteg (34) des Lagerblocks (16) begrenzt, wobei dieser zweite Biegesteg (34) - in einer zur zweiten Raumscheibe (RII) im wesentlichen parallelen Schnittebene (CII) betrachtet - einen länglichen Querschnitt mit einer kurzen und einer langen Querschnittsachse (k2,l2) besitzt und die lange Querschnittsachse (l2) eine zweite Biegeachse (l2) des Lagerblocks (16) bildet und wobei die zweite Biegeachse (l2) die erste Biegeachse (l2) annähernd orthogonal kreuzt.

2. Elastischer Lagerblock nach Anspruch 1,
**dadurch gekennzeichnet,**
daß die erste Biegeachse (l1) zu der Führungsrichtung (S) im wesentlichen parallel und die zweite Biegeachse (l2) zu der Führungsrichtung (S) im wesentlichen orthogonal verläuft.

3. Elastischer Lagerblock nach den Ansprüchen 1 oder 2,
**dadurch gekennzeichnet,**
daß in mindestens einer der ersten und der zweiten virtuellen Raumscheiben (RI,RII) zwei erste bzw. zweite Schlitze (24,26 bzw. 30,32) vorgesehen sind, deren Schlitzböden (24a,26a bzw. 30a,32a) zwischen sich den ersten bzw. zweiten Biegesteg (28 bzw. 34) bilden.

4. Elastischer Lagerblock nach einem der Ansprüche 1 bis 3,
**dadurch gekennzeichnet,**
daß der Lagerblock (16) in einer zu den virtuellen Raumscheiben (RI,RII) senkrechten Betrachtungsrichtung betrachtet einen im wesentlichen rechteckigen Umriß besitzt und daß die beiden Biegestege (28,34) parallel zu jeweils einer Begrenzungsseite des rechteckigen Umrisses verlaufen.

5. Elastischer Lagerblock nach Anspruch 4,
**dadurch gekennzeichnet,**
daß sich die beiden Biegeachsen (l1,l2) im Zentrum des rechteckigen Umrisses kreuzen.

6. Elastischer Lagerblock nach einem der Ansprüche 1 bis 5,
**dadurch gekennzeichnet,**
daß der Lagerblock (16) mit mindestens einem der Teile Führungselement (12) und Bauelement (340) lösbar verbunden ist.

7. Elastischer Lagerblock nach Anspruch 6,
**dadurch gekennzeichnet,**
daß der Lagerblock (16) an mindestens einem der Teile Bauelement (340) und Führungselement (12) in einer Befestigungsebene (20,14) anliegt, welche zu der ersten und der zweiten Biegeachse (l1,l2) annähernd parallel ist.

8. Elastischer Lagerblock nach einem der Ansprüche 1 bis 7,
**dadurch gekennzeichnet,**
daß der Lagerblock (116) mit mindestens einem der Teile Führungselement (112) und Bauelement einstückig hergestellt ist.

9. Elastischer Lagerblock nach einem der Ansprüche 1 bis 8,
**dadurch gekennzeichnet,**
daß der Schlitzboden (224a,226a) mindestens eines der Schlitze (224,226) durch die Umfangsfläche einer sich in den Schlitz (224,226) öffnenden Bohrung (224b,226b) gebildet ist.

10. Elastischer Lagerblock nach Anspruch 9,
**dadurch gekennzeichnet,**
daß die Bohrung (224b,226b) einen gegenüber der Schlitzbreite vergrößerten Durchmesser besitzt.

11. Elastischer Lagerblock nach einem der Ansprüche 1 bis 10,
**dadurch gekennzeichnet,**
daß er aus Metall hergestellt ist.

12. Elastischer Lagerblock nach Anspruch 11,
**dadurch gekennzeichnet,**
daß er aus Federstahl hergestellt ist.

13. Linearführung eines Bauelements (340) auf mindestens einer Führungsschiene (10) unter Verwendung mindestens eines Lagerblocks (16) nach einem der Ansprüche 1 bis 12 als Verbindungsmittel zwischen dem Bauelement (340) und mindestens einem auf der Führungsschiene (10) geführten Führungselement (12), wobei das Führungselement (12) auf der Führungsschiene (10) um die Achse (S) der Führungsschiene (10) unverdrehbar ist.

14. Linearführung nach Anspruch 13,
**dadurch gekennzeichnet,**
daß das Bauelement (340) durch mindestens einen Lagerblock (316) auf mindestens einem auf einer Führungsschiene (310) laufenden Führungselement (312) gelagert ist und daß das Bauelement (340) ferner durch mindestens ein zusätzliches Unterstützungselement (344) auf einer außerhalb der Führungsschiene (310) gelegenen zur Führungsschiene (310) parallelen Unterstützungsbahn (346) geführt ist.

15. Linearführung nach Anspruch 14,
**dadurch gekennzeichnet,**
daß die Gesamtzahl der Führungselemente (312) und der zusätzlichen Unterstützungselemente (344) mindestens und vorzugsweise 3 ist.

16. Linearführung nach einem der Ansprüche 14 oder 15,
**dadurch gekennzeichnet,**
daß das Unterstützungselement (344) eine Laufrolle (344) ist.

17. Linearführung nach Anspruch 16,
**dadurch gekennzeichnet,**
daß die Laufrolle (344) auf einer Laufebene (346) läuft, welche gleichzeitig Träger der Führungsschiene (310) ist.

18. Linearführung nach einem der Ansprüche 14 bis 17,
**dadurch gekennzeichnet,**
daß neben einem Führungselement (312) zwei in Führungsrichtung (S) beabstandete Unterstützungselemente (344) vorgesehen sind.

19. Linearführung nach Anspruch 13,
**dadurch gekennzeichnet**,
daß das Bauelement (440) auf zwei zueinander im wesentlichen parallelen Führungsschienen (410l,410r) durch jeweils mindestens ein Führungselement (412l,412r1,412r2) geführt ist.

20. Linearführung nach Anspruch 19,
**dadurch gekennzeichnet**,
daß das Bauelement (440) auf einer ersten Führungsschiene (410r) durch zwei Führungselemente (412r1,412r2) unter Vermittlung jeweils eines Lagerblocks (416r1,416r2) geführt ist und auf der zweiten Führungsschiene (412l) durch ein einziges Führungselement (412l) wiederum unter Vermittlung eines Lagerblocks (416l).

21. Linearführung nach einem der Ansprüche 13 bis 20,
**dadurch gekennzeichnet,**
daß das Führungselement (212) U-förmig ausgebildet ist mit mindestens zwei einen Teil der Führungsschiene (210) zwischen sich aufnehmenden Schenkeln (212A,212B) und einem diese Schenkel (212A,212B) miteinander verbindenden Steg (212C), wobei jedem der Schenkel mindestens ein Wälzkörperumlauf (213x,213y) zugeordnet ist und jeder der Wälzkörperumläufe (213x,213y) eine lastübertragende Wälzkörperreihe (211x,211y) in Eingriff mit jeweils einer lastaufnehmenden Laufbahn (212Ax,212Ay) des jeweiligen Schenkels (212A,212B) des Führungselements (212) und jeweils einer lastübertragenden Laufbahn (210Ax,210Ay) an einer diesem Schenkel (212A,212B) benachbarten Seitenfläche (210A, 210B) der Führungsschiene (210) aufweist und wobei weiter auf dem Steg (212C) mindestens ein Lagerblock (216) angeordnet ist.

## Claims

1. Elastic bearing block for mounting a structural element (340), which is to be linearly guided, on a guide element (12), which is linearly guided on a guide track assembly (10) in a guidance direction (S), wherein, in the bearing block (16), at least one first slit (24, 26) is provided in a first virtual space slab (RI) approximately parallel to the guide direction (S), the first slit base (24a, 26a) of which slit bounds a first bending web (28) of the bearing block (16) and wherein this first bending web (28) - as view in a sectional plane (CI) parallel to the first virtual space slab (RI) - has an elongate cross-section with a short and a long cross-sectional axis (k1, l1) and the long cross-sectional axis (l1) forms a first bending axis (l1) of the bearing block (16),
characterized in that,
in a second virtual space slab (RII), substantially parallel to the first virtual space slab (RI), at least one second slit (30, 32) is provided, the second slit base (30a, 32a) of which, extending substantially perpendicularly to the first slit base (24a, 26a), bounds a second bending web (34) of the bearing block (16), this second bending web (34) - as viewed in a sectional plane (CII) substantially parallel to the second space slab (RII) - having an elongate cross-section with a short and a long cross-sectional axis (k2, l2), and the long cross-sectional axis (l2) constituting a second bending axis (l2) of the bearing block (16) and the second bending axis (l2) crossing the first bending axis (l1) approximately perpendicularly.

2. Elastic bearing block according to Claim 1, characterized in that the first bending axis (l1) extends substantially parallel to the guide direction (S) and the second bending axis (l2) extends substantially perpendicularly to the guide direction (S).

3. Elastic bearing block according to Claims 1 or 2, characterized in that, in at least one of the first and the second virtual space slabs (RI, RII), two first and two second slits (24, 26; 30, 32 respectively) are provided, the slit bases 24a, 26a; 30a, 32a respectively) of which form between them the first and second bending webs (28; 34 respectively).

4. Elastic bearing block according to one of Claims 1 to 3, characterized in that the bearing block (16), as viewed in a direction perpendicular to the virtual space slabs (RI, RII), has a substantially rectangular outline, and that the two bending webs (28, 34) each run parallel to one boundary side of the rectangular outline.

5. Elastic bearing block according to Claim 4, characterized in that the two bending axes (l1, l2) cross each other at the centre of the rectangular outline.

6. Elastic bearing block according to one of Claims 1 to 5, characterized in that the bearing block (16) is releasably connected with at least one of the parts guide element (12) and structural element (340).

7. Elastic bearing block according to Claim 6, characterized in that the bearing block (16) bears against at least one of the parts structural element (340) and guide element (12) in a fixing plane (20, 14), which is approximately parallel to the first and the second bending axes ((l1, l2).

8. Elastic bearing block according to one of Claims 1 to 7, characterized in that the bearing block (116) is produced in one piece with at least one of the parts guide element (112) and structural element.

9. Elastic bearing block according to one of Claims 1 to 8, characterized in that the slit base (224a, 226a) of at least one of the slits (224, 226) is formed by the peripheral surface of a bore (224b, 226b) opening into the slit (224, 226).

10. Elastic bearing block according to Claim 9, characterized in that the bore (224b, 226b) has a diameter larger than the width of the slit.

11. Elastic bearing block according to one of Claims 1 to 10, characterized in that it is made of metal.

12. Elastic bearing block according to Claim 11, characterized in that it is made of spring steel.

13. Linear guide for a structural element (340) on at least one guide rail (10) using at least one bearing block (16) according to one of Claims 1 to 12 as connecting means between the structural element (340) and at least one guide element (12), guided on the guide rail (10), wherein the guide element (12) is non-rotatable on the guide rail (10) about the axis (S) of the guide rail (10).

14. Linear guide according to Claim 13, characterized in that the structural element (340) is mounted by at least one bearing block (316) on at least one guide element (312) running on a guide rail (310), and that the structural element (340) is furthermore guided by at least one additional supporting element (344) on a supporting track (346) parallel to the guide rail (310) and located outside the guide rail (310).

15. Linear guide according to Claim 14, characterized in that the total number of guide elements (312) and additional supporting elements (344) is at least and preferably 3.

16. Linear guide according to one of Claims 14 or 15, characterized in that the supporting element (344) is a roller (344).

17. Linear guide according to Claim 16, characterized in that the roller (344) runs on a running plane (346), which at the same time is the support for the guide rail (310).

18. Linear guide according to one of Claims 14 to 17, characterized in that two supporting elements (344), spaced apart in the guidance direction (S), are provided adjacent to one guide element (312).

19. Linear guide according to Claim 13, characterized in that the structural element (440) is guided on two substantially parallel guide rails (410l, 410r) by at least one guide element each (412l, 412r1, 412r2).

20. Linear guide according to Claim 19, characterized in that the structural element (440) is guided on a first guide rail (410r) by two guide elements (412r1, 412r2) by means in each case of a bearing block (416r1, 416r2), and on the second guide rail (410l) by a single guide element (412l), once again by means of one bearing block (416l).

21. Linear guide according to one of Claims 13 to 20, characterized in that the guide element (212) is U-shaped, comprising at least two arms (212A, 1212B), accommodating between them a part of the guide rail (210), and a web (212C), connecting these arms (212A, 212B) together, wherein at least one circulating roller train (213x, 213y) is associated with each of the arms and each of the circulating roller trains (213x, 213y) possesses a load-transferring series of rollers (211x, 211y) in engagement each with one load-bearing track (212Ax, 212Ay) of the relevant arm (212A, 212B) of the guide element (212) and one load-transferring track (210Ax) 210Ay) on a lateral surface (210A, 210B) of the guide rail (210) adjacent to this arm (212A, 212B), and wherein furthermore at least one bearing block (216) is mounted on the web (212C).

## Revendications

1. Bloc d'appui élastique pour la suspension d'un composant (340) à guider linéairement sur un élément de guidage (12), qui est guidé linéairement sur un dispositif de glissières de guidage (10) le long d'une direction de guidage (S), au moins une première fente (24, 26) dont le premier fond (24a, 26a) délimite une première entretoise de flexion (28) du bloc d'appui (16) étant prévue dans le bloc d'appui (16), dans un premier disque spatial virtuel (RI), approximativement parallèle à la direction de guidage (S), et cette première entretoise de flexion (28) - vue dans un plan de coupe (CI) parallèle au premier disque spatial virtuel (RI) - présentent une section transversale allongée avec un axe court (k1) et un axe long (l1) et l'axe long (l1) de la section transversale forment un premier axe de flexion (l1) du bloc d'appui (16), caractérisé en ce que dans un second disque spatial virtuel (RII), sensiblement parallèle au premier disque spatial virtuel (RI), il est prévu au moins une seconde fente (30, 32) dont le second fond (30a, 32a), sensiblement orthogonal au premier fond (24a, 26a), délimite une seconde entretoise de flexion (34) du bloc d'appui (16), cette seconde entretoise de flexion (34) - vue dans un plan de coupe (CII) sensiblement parallèle au second disque spatial (RII) - présentant une section transversale allongée avec un axe court (k2) et un axe long (l2) et l'axe long (l2) de la section transversale formant un second axe de flexion (l2) du bloc d'appui (16) et le second axe de flexion (l2) croisant à peu près orthogonalement le premier axe de flexion (l2).

2. Bloc d'appui élastique selon la revendication 1, caractérisé en ce que le premier axe de flexion (l1) est sensiblement parallèle à la direction de guidage (S) et le second axe de flexion (l2) est sensiblement orthogonal à la direction de guidage (S).

3. Bloc d'appui élastique selon les revendications 1 ou 2, caractérisé en ce que dans au moins l'un des premier et second disques spatiaux virtuels (RI, RII) sont prévues deux premières ou deux secondes fentes (24, 26 ou 30, 32) dont les fonds (24a, 26a ou 30a, 32a) forment entre eux la première ou la seconde entretoise de flexion (28 ou 34).

4. Bloc d'appui élastique selon l'une des revendications 1 à 3, caractérisé en ce que le bloc d'appui (16) vu dans une direction d'observation perpendiculaire aux disques spatiaux virtuels (RI, RII), présente un contour sensiblement rectangulaire, et en ce que les deux entretoises de flexion (28, 34) sont parallèles chacune à un côté de délimitation du contour rectangulaire.

5. Bloc d'appui élastique selon la revendication 4, caractérisé en ce que les deux axes de flexion (l1, l2) se croisent au centre du contour rectangulaire.

6. Bloc d'appui élastique selon l'une des revendications 1 à 5, caractérisé en ce que le bloc d'appui (16) est relié de façon amovible avec au moins l'un des éléments que sont l'élément de guidage (12) et le composant (340).

7. Bloc d'appui élastique selon la revendication 6, caractérisé en ce que le bloc d'appui (16) s'applique contre au moins l'un des éléments que sont le composant (340) et l'élément de guidage (12) dans un plan de fixation (20, 14) qui est approximativement parallèle au premier et au second axe de flexion (l1, l2).

8. Bloc d'appui élastique selon l'une des revendications 1 à 7, caractérisé en ce que le bloc d'appui (116) est réalisé d'une seule pièce avec au moins l'un des éléments que sont l'élément de guidage (112) et le composant.

9. Bloc d'appui élastique selon l'une des revendications 1 à 8, caractérisé en ce que le fond (224a, 226a) d'au moins l'une des fentes (224, 226) est formé par la surface périphérique d'un alésage (224b, 226b) s'ouvrant dans la fente (224, 226).

10. Bloc d'appui élastique selon la revendication 9, caractérisé en ce que l'alésage (224b, 226b) présente un diamètre plus grand que la largeur des fentes.

11. Bloc d'appui élastique selon l'une des revendications 1 à 10, caractérisé en ce qu'il est en métal.

12. Bloc d'appui élastique selon la revendication 11, caractérisé en ce qu'il est en acier à ressorts.

13. Dispositif de guidage linéaire d'un composant (340) sur au moins un rail de guidage (10) par utilisation d'au moins un bloc d'appui (16) selon l'une des revendications 1 à 12 servant de moyen de liaison entre le composant (340) et au moins un élément de guidage (12), guidé sur le rail de guidage (10), l'élément de guidage (12) ne pouvant tourner sur le rail de guidage (10) autour de l'axe (S) du rail de guidage (10).

14. Dispositif de guidage linéaire selon la revendication 13, caractérisé en ce que le composant (340) est monté par au moins un bloc d'appui (316) sur au moins un élément de guidage (312) se déplaçant sur un rail de guidage (310), et en ce que le composant (340) est guidé en outre par au moins un élément de soutien (344) supplémentaire, sur une voie de soutien (346) située à l'extérieur du rail de guidage (310) et parallèle à celui-ci.

15. Dispositif de guidage linéaire selon la revendication 14, caractérisé en ce que le nombre total d'éléments de guidage (312) et d'éléments de soutien (344) supplémentaires est au moins et de préférence égal à 3.

16. Dispositif de guidage linéaire selon l'une des revendications 14 ou 15, caractérisé en ce que l'élément de soutien (344) est une roulette (344).

17. Dispositif de guidage linéaire selon la revendication 16, caractérisé en ce que la roulette (344) roule sur un plan de roulement (346) qui sert en même temps de support au rail de guidage (310).

18. Dispositif de guidage linéaire selon l'une des revendications 14 à 17, caractérisé en ce qu'à côté d'un élément de guidage (312), deux éléments de soutien (344) espacés dans la direction de guidage (S) sont prévus.

19. Dispositif de guidage linéaire selon la revendication 13, caractérisé en ce que le composant (440) est guidé sur deux rails de guidage (410l, 410r) sensiblement parallèles entre eux, par au moins un élément de guidage (412l, 412r1, 412r2).

20. Dispositif de guidage linéaire selon la revendication 19, caractérisé en ce que le composant (440) est guidé sur un premier rail de guidage (410r) par deux éléments de guidage (412r1, 412r2) par l'intermédiaire d'un bloc d'appui (416r1, 416r2) chacun et sur le second rail de guidage (412l) par un seul élément de guidage (412l), à nouveau par l'intermédiaire d'un bloc d'appui (416l).

21. Dispositif de guidage linéaire selon l'une des revendications 13 à 20, caractérisé en ce que l'élément de guidage (212) est en forme de U avec au moins deux branches (212A, 212B) logeant entre elles une partie du rail de guidage (210) et une entretoise (212C) reliant entre elles ces branches (212A, 212B), au moins une circulation de corps de roulement (213x, 213y) étant associée à chacune des branches et chacune des circulations de corps de roulement (213x, 213y) comportant une rangée de corps de roulement (211x, 211y) transmettant la charge en prise avec chacune une voie de roulement (212Ax, 212Ay) recevant la charge de la branche 212A, 212B) correspondante de l'élément de guidage (212) et avec chacune une voie de roulement (210Ax, 210Ay) transmettant la charge sur une surface latérale (210A, 210B) du rail de guidage (210), voisine de cette branche (212A, 212B), et par ailleurs un bloc d'appui (216) au moins étant prévu sur l'entretoise (212C).
